# EUROPÄISCHE PATENTSCHRIFT

(11) **EP 3 957 885 B1**
(45) Veröffentlichungstag und Bekanntmachung des Hinweises auf die Patenterteilung: **28.02.2024**
(21) Anmeldenummer: 21191435.3
(22) Anmeldetag: 16.08.2021
(51) Int. Cl.: F16K 27/00, F15B 13/044, F15B 13/06, F15B 13/08, F16K 27/02, F16K 31/06

(54) **ELEKTRISCH BETÄTIGTES VENTIL**
ELECTRICALLY ACTUATED VALVE
SOUPAPE À COMMANDE ÉLECTRIQUE

(30) Priorität: 20.08.2020 DE 102020210547
(43) Veröffentlichungstag der Anmeldung: 23.02.2022
(73) Patentinhaber: Robert Bosch GmbH, 70442 Stuttgart (DE)
(72) Erfinder: Schneider, Claus, 97775 Burgsinn (DE)

(56) Entgegenhaltungen:
- DE-A1-102009 030 887
- DE-A1-102016 214 244
- DE-A1-102018 009 853
- DE-A1-102018 208 614
- US-A1- 2005 127 314
- US-A1- 2005 282 426

## Beschreibung

Die Erfindung betrifft ein elektrisch betätigtes Ventil gemäß dem Oberbegriff des Patentanspruchs 1.

Die DE 10 2018 009 853 A1 offenbart eine hydraulische Vorrichtung für die Betätigung von Stellgliedern in einem Kraftfahrzeuggetriebe.

Die US 2005/0282426 A1 offenbart eine Kombination von Magnetventilen in einem gemeinsamen Ventilkörper. An dem Ventilgehäuse ist eine elektrische Baugruppe angeordnet, die über Zapfen und entsprechende Ausnehmungen positioniert wird.

Bei elektrisch betätigten Ventilen ist es bekannt, dass in einem etwa quaderförmigen Ventilgehäuse ein Ventilkörper über beidseitige elektrische Aktuatoren verschiebbar angeordnet ist. Die elektrischen Aktuatoren haben Spulen und Anker, die in einem Gehäuse aufgenommen sind. Zur Ansteuerung der Aktuatoren ist eine so genannte On-Bord-Elektronik (OBE) vorgesehen, die mit den beiden Aktuatoren in elektrischer Verbindung ist. Ein Elektronikgehäuse der On-Bord-Elektronik ist an dem Ventilgehäuse befestigt. Dabei sind zwischen den Gehäusen der Aktuatoren und den dazu benachbarten Abschnitten des Elektronikgehäuses Dichtungen angebracht, um die elektrischen Verbindungen und darüber hinausgehend auch die Elektronik und die Aktuatoren gegenüber Umwelteinflüssen, insbesondere Feuchtigkeit abzudichten.

Da diese Dichtungen mechanisch vergleichsweise instabil sind, muss ihre Einspannung zwischen dem Elektronikgehäuse und dem Aktorgehäuse durch ein präzises Zusammensetzen der beiden Gehäuse erfolgen.

Die DE 10 2018 208 614 A1 zeigt ein derartiges Ventil mit einer Dichtung. Weiterhin ist an einem Wegsensor eine Zentrierhülse angeordnet, die in einen Gehäusedurchbruch des Elektronikgehäuses eingreift, um das Elektronikgehäuse in Längsrichtung des Ventils axial zu fixieren.

Gemäß dem Stand der Technik wird diese Präzision durch eine Montagevorrichtung erreicht, die vorrichtungstechnisch aufwändig und daher kostenintensiv ist.

Dem gegenüber liegt der Erfindung die Aufgabe zu Grunde, ein elektrisch betätigtes Ventil zu schaffen, bei dem die Montage der mindestens einen Dichtung vorrichtungstechnisch vereinfacht und weniger kostenintensiv ist. Es sollen Längenabweichungen entlang der Ventillängsachse ausgeglichen werden können.

Diese Aufgabe wird gelöst durch ein elektrisch betätigtes Ventil mit den Merkmalen des Patentanspruchs 1.

Weitere vorteilhafte Ausgestaltungen der Erfindung sind in den abhängigen Patentansprüchen beschrieben.

Das beanspruchte elektrisch betätigte Ventil hat ein Ventilgehäuse und mindestens einen elektromagnetischen Aktor, der ein Aktorgehäuse aufweist. Genauer gesagt ist am Ventilgehäuse an zwei einander gegenüber liegenden Seiten jeweils ein Aktorgehäuse befestigt. Da sich beide Aktorgehäuse entlang einer Ventillängsachse erstrecken, können diese gegeneinander an einem Ventilkörper wirken. Weiterhin ist eine Elektronik vorgesehen, die in einem Elektronikgehäuse aufgenommen ist. Zwischen dem Aktorgehäuse und dem Elektronikgehäuse ist eine Dichtung angeordnet, insbesondere eingespannt. Erfindungsgemäß ist am Ventil eine Positioniervorrichtung vorgesehen oder gebildet, die zur Ausrichtung des Elektronikgehäuses gegenüber dem Aktorgehäuse und damit gegenüber der Dichtung (oder umgekehrt) dient. Daher kann die erfindungsgemäße Positioniervorrichtung auch als Positionierhilfe bezeichnet werden. Die Ausrichtung erfolgt während der Montage. Damit ist ein elektrisch betätigtes Ventil mit einem selbstausrichtenden Elektronikgehäuse geschaffen, bei dem die Montage bzw. die Einspannung der mindestens einen Dichtung vorrichtungstechnisch vereinfacht und weniger kostenintensiv ist.

Bei der erfindungsgemäßen Positioniervorrichtung handelt es sich um zwei Kombinationen aus einem jeweiligen Zapfen und einer jeweiligen Ausnehmung. Die beiden Zapfen dienen als Passstifte, die bei der Montage in die beiden Ausnehmungen eingeführt werden. Weiterhin dienen derartige Passstifte auch einer präzisen Fixierung des Elektronikgehäuses gegenüber dem mindestens einen Aktorgehäuse während des Betriebs des erfindungsgemäßen Ventils. Damit ist die Dichtigkeit der mindestens einen Dichtung über die Lebensdauer des Ventils erhöht.

Ein erster Zapfen ist kreiszylindrisch, und ein zweiter Zapfen hat - basierend auf einer ebenfalls kreiszylindrischen Grundform - Abflachungen etwa in Richtung der Ventillängsachse. Damit kann der zweite Zapfen das Elektronikgehäuse quer zur Ventillängsachse genau ausrichten und dabei Längenabweichungen entlang der Ventillängsachse ausgleichen.

Wenn das mindestens eine Aktorgehäuse an dem Ventilgehäuse befestigt ist, kann die Positioniervorrichtung zwischen dem Elektronikgehäuse und dem Ventilgehäuse gebildet sein und auf diese Weise indirekt das Elektronikgehäuse gegenüber dem mindestens einen Aktorgehäuse (oder umgekehrt) ausrichten.

Die Positioniervorrichtung wirkt besonders präzise, wenn sich der Zapfen und Ausnehmungen quer zur Ventillängsachse erstrecken.

Bei einer Variante sind die beiden Zapfen am Elektronikgehäuse gebildet, während die beiden Ausnehmungen am Ventilgehäuse gebildet sind.

Fertigungstechnisch einfach ist es dabei, wenn das Elektronikgehäuse mit den beiden Zapfen ein Aluminium- oder Kunststoffteil ist.

Die Positioniervorrichtung wirkt besonders präzise, wenn die beiden Kombinationen aus Zapfen und Ausnehmung einen möglichst großen Abstand zueinander haben. Dies ist z.B. der Fall, wenn die beiden Kombinationen jeweils benachbart zu einem aktorseitigen Rand einer dem Elektronikgehäuse zugewandten Oberfläche des Ventilgehäuses angeordnet sind.

Bei der Variante mit den Zapfen am Elektronikgehäuse und den Ausnehmungen am Ventilgehäuse sind dabei die beiden Ausnehmungen jeweils an einem aktorseitigen Rand der dem Elektronikgehäuse zugewandten Oberfläche des Ventilgehäuses angeordnet.

Es können insgesamt zwei Paare von Abflachungen vorgesehen sein. Die beiden Paare liegen einander gegenüber am Umfang des zweiten Zapfens. Jedes Paar hat zwei zueinander angestellte Abflachungen.

Im Innern der mindestens einen Dichtung ist jeweils eine elektrische Verbindung zwischen der Elektronik und dem zugeordneten Aktor vorgesehen. Diese elektrische Verbindung kann von mindestens einem Flachstecker (Flachsteckerzunge) und mindestens einer Flachsteckeraufnahme gebildet sein.

Ein Ausführungsbeispiel des erfindungsgemäßen elektrisch betätigten Ventils ist in den Figuren dargestellt.

Es zeigen
Figur 1 das erfindungsgemäße elektrisch betätigte Ventil gemäß dem Ausführungsbeispiel in einer seitlichen Ansicht,
Figur 2 eine Hydraulikeinheit des Ventils aus Figur 1 in einer perspektivischen Ansicht,
Figur 3 eine Elektronik des Ventils aus Figur 1 in einer perspektivischen Ansicht,
Figur 4 einen Ausschnitt aus Figur 2 und
Figur 5 die Elektronik des Ventils aus Figur 3 in einer perspektivischen Ansicht von unten.

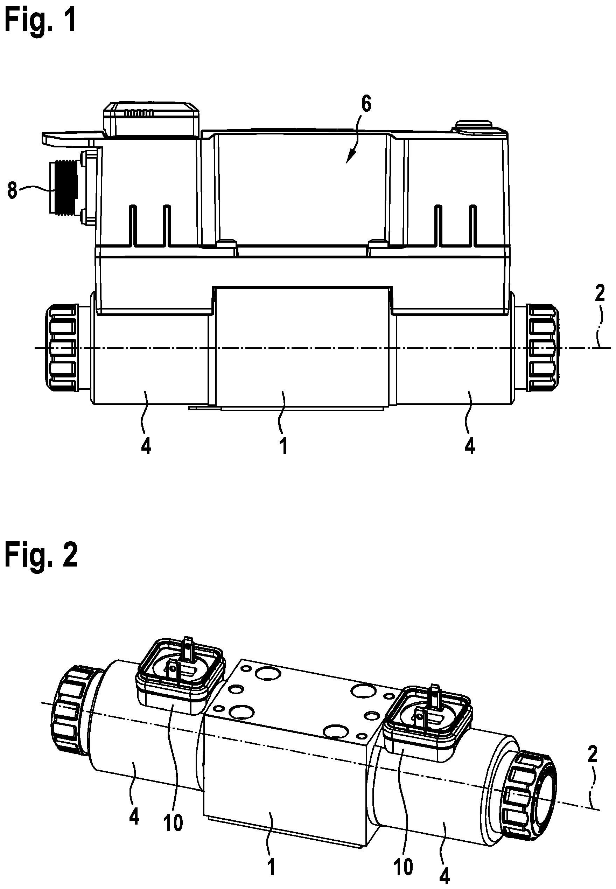

Figur 1 zeigt in einer seitlichen Ansicht das Ausführungsbeispiel des erfindungsgemäßen elektrisch betätigten Ventils. In einem etwa quaderförmigen metallischen Ventilgehäuse 1 ist ein (nicht gezeigter) Ventilschieber entlang einer Längsachse 2 verschiebbar. Dies geschieht mittels zweier gegeneinander wirkender elektromagnetischer Aktoren, deren Spulen in etwa kreiszylindrischen Aktorgehäusen 4 aufgenommen sind.

An einer (in Figur 1 oberen) Seite der aus dem Ventilgehäuse 1 und den beiden Aktoren 4 gebildeten Hydraulikeinheit ist ein Elektronikgehäuse 6 angesetzt, in dem eine (nicht gezeigte) Elektronik aufgenommen ist. Die Elektronik dient zur Steuerung und Regelung und zur Stromversorgung der beiden Aktoren, so dass z.B. ein in dem Ventilgehäuse 1 gebildetes 4/3-Wegeventil kontinuierlich verstellt werden kann. Über einen Stecker 8 wird die Elektronik mit Strom versorgt und angesteuert.

Figur 2 zeigt die Hydraulikeinheit bestehend aus dem etwa quaderförmigen Ventilgehäuse 1 und den beiden Aktoren. Am Außenumfang der beiden zylinderförmigen Aktorgehäuse 4 an einer dem (in Figur 2 nicht gezeigten) Elektronikgehäuse 6 zugewandten Seite sind jeweilige Sockel 10 gebildet, über den das Aktorgehäuse 4 mit dem Elektronikgehäuse 6 räumlich verbunden ist. Jeder Sockel 10 ist mit einem dem Elektronikgehäuse 6 zugewandten rechteckigen Rand mit abgerundeten Ecken ausgebildet. An diesem Rand ist jeweils eine umlaufende Dichtung 12 angeordnet.

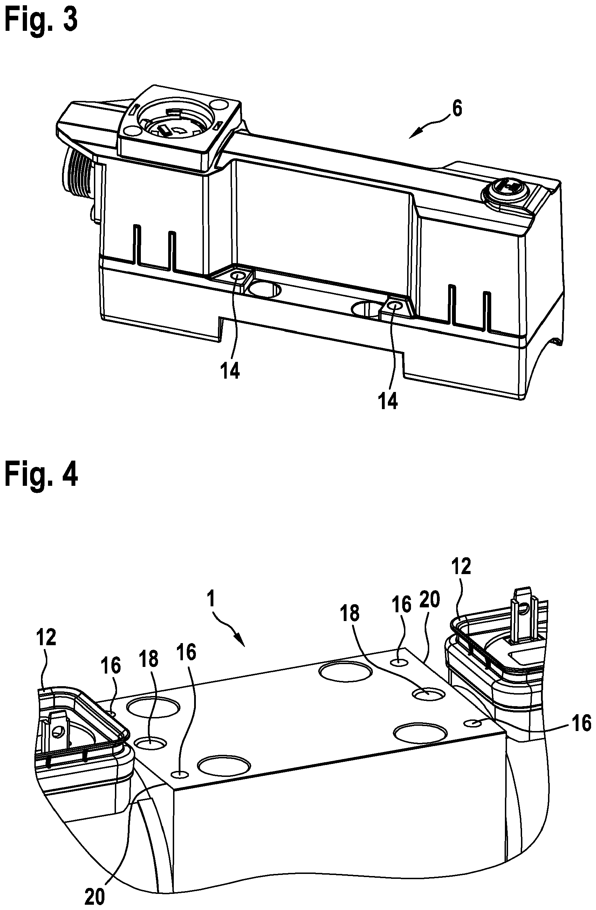

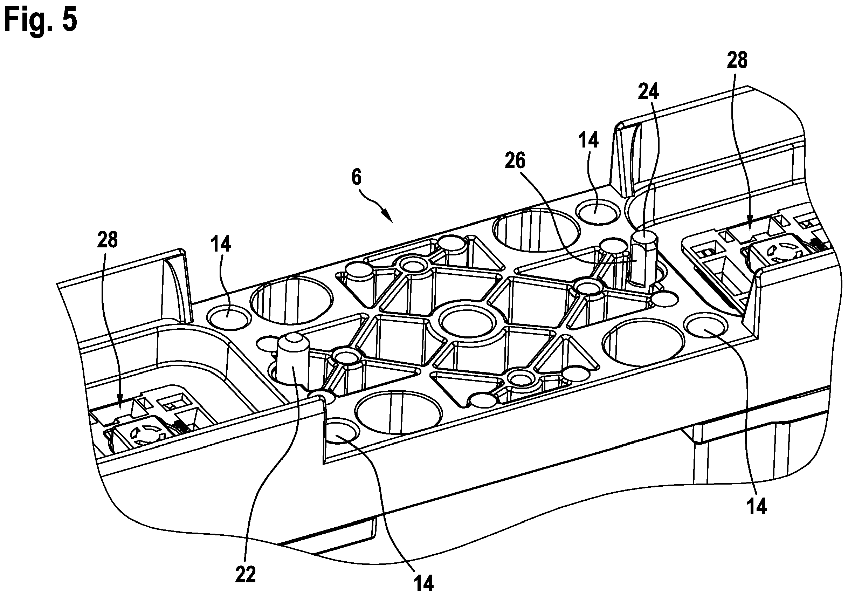

Die beiden Dichtungen 12 haben an ihren dem Elektronikgehäuse 6 zugewandten Seiten eine umlaufende vergleichsweise dünne Lippe. Daher muss bei dem Zusammensetzen der Hydraulikeinheit gemäß Figur 2 mit dem Elektronikgehäuse 6 (vgl. Figur 1) eine präzise Zusammenführung der beiden genannten Komponenten stattfinden. Dies erfolgt über die erfindungsgemäße Positioniervorrichtung, die mit Bezug zu den Figuren 4 und 5 erläutert wird.

Im Innern des Sockels 10 bzw. der Dichtung 12 sind die Zungen zweier Flachstecker zu erkennen, über die der Aktor mit der Elektronik elektrisch verbunden wird.

Figur 3 zeigt in einer perspektivischen Ansicht das Elektronikgehäuse 6. Zu seiner Befestigung an der Hydraulikeinheit gemäß Figur 2, genauer gesagt zur Befestigung an deren Ventilgehäuse 1 sind vier Durchgangsausnehmungen 14 vorgesehen, durch die Befestigungsschrauben geführt werden.

Figur 4 zeigt eine Vergrößerung der Hydraulikeinheit, insbesondere des Ventilgehäuses 1. In der gezeigten dem Elektronikgehäuse zugewandten Oberfläche des Ventilgehäuses 1 sind vier Gewindebohrungen 16 für die Befestigungsschrauben vorgesehen. Weiterhin sind in dieser Oberfläche zwei als Bohrungen ausgebildete kreiszylinderförmige Ausnehmungen 18 vorgesehen. Diese sind Teil der erfindungsgemäßen Ausrichtvorrichtung. Um den Abstand der beiden Ausnehmungen 18 entlang der Längsachse 2 möglichst groß zu gestalten, sind die beiden Ausnehmungen 18 direkt benachbart zu einem jeweiligen aktorseitigen Rand 20 der gezeigten Oberfläche des Ventilgehäuses 1 angeordnet.

Figur 5 zeigt eine Ansicht der Hydraulikeinheit zugewandten (untere) Seite des Elektronikgehäuses 6. Von dieser Seite erstrecken sich zwei Zapfen 22,24, die der erfindungsgemäßen Ausrichtvorrichtung zugeordnet sind. Die Zapfen 22, 24 und die Ausnehmungen 18 aus Figur 4 erstrecken sich senkrecht zur Längsachse 2 (vgl. Figuren 1 oder 2). Die gezeigte (untere) Seite weist im Bereich zwischen den Zapfen 22, 24 eine Gitterstruktur (30), bestehend aus Verstrebungen und Ausnehmungen, auf, die die Stabilität bzw. die Quersteifigkeit erhöht und Material spart.

Die beiden Zapfen 22,24 sind einstückig mit dem Elektronikgehäuse 6 im Aluminiumdruckguss oder Kunststoff-Spritzgussverfahren gebildet. Die Zapfen 22, 24 unterscheiden sich in der geometrischen Ausführung.

Damit die Zapfen 22, 24 möglichst einfach in die in Figur 4 gezeigten Ausnehmungen 18 eingeführt werden können, haben die beiden Zapfen 22, 24 und die beiden Ausnehmungen 18 jeweils eine kreisrunde umlaufende Fase.

Der erste Zapfen 22 ist kreiszylindrisch. Der zweite Zapfen 24 hat eine entsprechende Grundform. Im zweiten Zapfen 24 sind allerdings zwei einander gegenüberliegende Paare von Abflachungen 26 vorgesehen, von denen in Figur 5 nur eine Abflachung 26 zu erkennen ist. Die insgesamt vier Abflachungen 26 bilden jeweilige Flächenabschnitte. Die beiden Abflachungen 26 eines Paares sind zueinander benachbart und zueinander in einem Winkel zwischen 90 und 180 Grad angestellt.

Durch diese Abflachungen 26 hat der zweite Zapfen 24 in der entsprechenden Ausnehmung 18 (vgl. Figur 4) entlang der Längsachse 2 (vgl. Figuren 1 oder 2) etwas Spiel. Dadurch kann ein eventueller geringer Unterschied zwischen einerseits dem Abstand der beiden Ausnehmungen 18 und andererseits dem Abstand der beiden Zapfen 20, 24 ausgeglichen werden. Quer zur Längsachse 2 hingegen ist eine fast spielfreie Positionierung des Elektronikgehäuses 6 gegenüber dem Ventilgehäuse 1 und damit indirekt auch gegenüber den Dichtungen 12 gegeben.

Durch die erfindungsgemäße Positioniervorrichtung kann z.B. auch Servicefall in einem eingebauten Zustand der Hydraulikeinheit des Ventils eine Ersatz-Elektronik mit einem entsprechenden Ersatz-Elektronikgehäuse 6 auf die beiden Dichtungen 12 gesetzt werden, ohne diese zu verschieben oder deren Lippen zu quetschen oder zu beschädigen.

In Figur 5 sind auch die Flachsteckeraufnahmen 28 dargestellt, in die die Flachsteckerzungen der Aktoren (vgl. Figur 2) eingeführt werden.

Offenbart ist ein elektrisch betätigtes Ventil mit einer Hydraulikeinheit bestehend aus einem Ventilgehäuse und zumindest einem elektrischen Aktor. Eine Elektronik wird an der Hydraulikeinheit befestigt und dabei präzise positioniert, damit eine Dichtung zwischen der Elektronik und dem Aktor nicht verrutscht oder umklappt. Dazu ist zwischen der Elektronik und der Hydraulikeinheit eine Positioniervorrichtung gebildet.

### Bezugszeichenliste:

- 1: Ventilgehäuse
- 2: Längsachse
- 4: Aktorgehäuse
- 6: Elektronikgehäuse
- 8: Stecker
- 10: Sockel
- 12: Dichtung
- 14: Durchgangsausnehmung
- 16: Gewindebohrung
- 18: Ausnehmung
- 20: Rand
- 22: erster Zapfen
- 24: zweiter Zapfen
- 26: Abflachung
- 28: Flachsteckeraufnahme
- 30: Gitterstruktur

## Patentansprüche

1. Elektrisch betätigtes Ventil mit einem Ventilgehäuse (1), an dessen zwei einander gegenüber liegenden Seiten jeweils ein Aktorgehäuse (4) mit einem elektromagnetischen Aktor angeordnet ist, wobei sich die beiden Aktorgehäuse (4) entlang einer Längsachse (2) des Ventils erstrecken, und mit einer Elektronik, die ein Elektronikgehäuse (6) aufweist, wobei zwischen dem Aktorgehäuse (4) und jedem Elektronikgehäuse (6) eine Dichtung (12) angeordnet ist, wobei an dem Ventil eine Positioniervorrichtung für die Ausrichtung des Elektronikgehäuses (6) gegenüber den Aktorgehäusen (4) angeordnet oder gebildet ist, **dadurch gekennzeichnet, dass** die Positioniervorrichtung von zwei Kombinationen aus einem jeweiligen Zapfen (22, 24) und einer jeweiligen Ausnehmung (18) gebildet ist, wobei ein erster Zapfen (22) kreiszylindrisch ist, und wobei ein zweiter Zapfen (24) Abflachungen (26) hat.

2. Ventil nach Anspruch 1, wobei das mindestens eine Aktorgehäuse (4) an dem Ventilgehäuse (1) befestigt ist, und wobei die Positioniervorrichtung zwischen dem Elektronikgehäuse (6) und dem Ventilgehäuse (1) gebildet ist.

3. Ventil nach Anspruch 1, wobei sich die Zapfen (22, 24) und Ausnehmungen (18) quer zur Längsachse (2) erstrecken.

4. Ventil nach Anspruch 1 oder 3, wobei die beiden Zapfen (22, 24) am Elektronikgehäuse (6) gebildet sind, und wobei die beiden Ausnehmungen (18) am Ventilgehäuse (1) gebildet sind.

5. Ventil nach Anspruch 4, wobei das Elektronikgehäuse (6) mit den beiden Zapfen (22, 24) ein spritzgegossenes Kunststoffteil ist.

6. Ventil nach Anspruch 1, wobei die beiden Kombinationen jeweils benachbart zu einem aktorseitigen Rand (20) einer dem Elektronikgehäuse (6) zugewandten Oberfläche des Ventilgehäuses (1) angeordnet sind.

7. Ventil nach einem der vorhergehenden Ansprüche, wobei im Innern der Dichtung (12) mindestens ein Flachstecker und mindestens eine Flachsteckeraufnahme (28) angeordnet sind.

8. Ventil nach Anspruch 5, wobei das Elektronikgehäuse (6) zwischen den beiden Zapfen (22, 24) eine Gitterstruktur (30) aufweist.

## Claims

1. Electrically actuated valve with a valve housing (1), on the two mutually oppositely situated sides of which there is arranged in each case one actuator housing (4) with an electromagnetic actuator, wherein the two actuator housings (4) extend along a longitudinal axis (2) of the valve, and with electronics, which have an electronics housing (6), wherein a seal (12) is arranged between the actuator housing (4) and each electronics housing (6), wherein a positioning device for orientation of the electronics housing (6) in relation to the actuator housing (4) is arranged or formed on the valve, **characterized in that** the positioning device is formed by two combinations of a respective pin (22, 24) and a respective cutout (18), wherein a first pin (22) is circular-cylindrical, and wherein a second pin (24) has flattened portions (26).

2. Valve according to Claim 1, wherein the at least one actuator housing (4) is fastened to the valve housing (1), and wherein the positioning device is formed between the electronics housing (6) and the valve housing (1).

3. Valve according to Claim 1, wherein the pins (22, 24) and cutouts (18) extend transversely to the longitudinal axis (2).

4. Valve according to Claim 1 or 3, wherein the two pins (22, 24) are formed on the electronics housing (6), and wherein the two cutouts (18) are formed on the valve housing (1).

5. Valve according to Claim 4, wherein the electronics housing (6) with the two pins (22, 24) is an injection-moulded plastic part.

6. Valve according to Claim 1, wherein the two combinations are each arranged adjacent to an actuator-side edge (20) of a surface, facing towards the electronics housing (6), of the valve housing (1).

7. Valve according to one of the preceding claims, wherein at least one flat connector and at least one flat-connector receptacle (28) are arranged in the interior of the seal (12).

8. Valve according to Claim 5, wherein the electronics housing (6) has a mesh structure (30) between the two pins (22, 24).

## Revendications

1. Soupape à commande électrique avec un boîtier de soupape (1) sur les deux côtés opposés duquel est agencé respectivement un boîtier d'actionneur (4) avec un actionneur électromagnétique, les deux boîtiers d'actionneur (4) s'étendant le long d'un axe longitudinal (2) de la soupape, et avec une électronique qui présente un boîtier d'électronique (6), un joint d'étanchéité (12) étant agencé entre le boîtier d'actionneur (4) et chaque boîtier d'électronique (6), un dispositif de positionnement pour l'orientation du boîtier d'électronique (6) par rapport aux boîtiers d'actionneur (4) étant agencé ou formé sur la soupape, **caractérisée en ce que** le dispositif de positionnement est formé par deux combinaisons d'un tourillon respectif (22, 24) et d'un évidement respectif (18), un premier tourillon (22) étant cylindrique circulaire et un deuxième tourillon (24) ayant des méplats (26).

2. Soupape selon la revendication 1, dans laquelle l'au moins un boîtier d'actionneur (4) est fixé au boîtier de soupape (1), et dans laquelle le dispositif de positionnement est formé entre le boîtier d'électronique (6) et le boîtier de soupape (1).

3. Soupape selon la revendication 1, dans laquelle les tourillons (22, 24) et les évidements (18) s'étendent transversalement à l'axe longitudinal (2).

4. Soupape selon la revendication 1 ou 3, dans laquelle les deux tourillons (22, 24) sont formés sur le boîtier d'électronique (6), et dans laquelle les deux évidements (18) sont formés sur le boîtier de soupape (1).

5. Soupape selon la revendication 4, dans laquelle le boîtier d'électronique (6) avec les deux tourillons (22, 24) est une pièce en plastique moulée par injection.

6. Soupape selon la revendication 1, dans laquelle les deux combinaisons sont chacune agencées de manière adjacente à un bord (20) côté actionneur d'une surface du boîtier de soupape (1) tournée vers le boîtier d'électronique (6).

7. Soupape selon l'une quelconque des revendications précédentes, dans laquelle au moins une fiche plate et au moins un logement de fiche plate (28) sont agencés à l'intérieur du joint d'étanchéité (12).

8. Soupape selon la revendication 5, dans laquelle le boîtier d'électronique (6) présente une structure en grille (30) entre les deux tourillons (22, 24).
